# EUROPÄISCHE PATENTSCHRIFT

(11) **EP 1 270 804 B1**
(45) Veröffentlichungstag und Bekanntmachung des Hinweises auf die Patenterteilung: **09.03.2005**
(21) Anmeldenummer: 02008994.2
(22) Anmeldetag: 23.04.2002
(51) Int. Cl.: D21C 5/02

(54) **Verfahren zur Entfernung von Störstoffen aus einer wässrigen Papierfasersuspension**
Method for removing impurities from an aqueous paper fiber suspension
Procédé pour éliminer des impuretés d'une suspension aqueuse de fibres à papier

(30) Priorität: 29.05.2001 DE 10125979
(43) Veröffentlichungstag der Anmeldung: 02.01.2003
(73) Patentinhaber: Voith Paper Patent GmbH, 89522 Heidenheim (DE)
(72) Erfinder: Britz, Herbert, 88250 Weingarten (DE); Hess, Harald, 88287 Grünkraut (DE); Kemper, Martin, 88250 Weingarten (DE)

(56) Entgegenhaltungen:
- EP-A- 0 537 416
- DE-A- 4 206 748
- DE-A- 4 215 532
- US-A- 5 417 806
- US-A- 5 804 061
- US-A- 5 882 480

## Beschreibung

Die Erfindung betrifft ein Verfahren zur Entfernung von Störstoffen aus einer wässrigen Papierfasersuspension gemäß dem Oberbegriff des Anspruchs 1 (siehe z.B. DE-A-4 215 532 oder EP-A-0 537 416).

Durch Flotation wird ein die auszuscheidenden Stoffe enthaltender Schaum oder Schwimmschlamm gebildet. Ein typischer Anwendungsfall für solche Verfahren ist die Aufbereitung von einer aus bedrucktem Altpapier gewonnenen Suspension, in der die Druckfarbenpartikel bereits von Fasern abgelöst sind, so daß sie sich ausflotieren lassen. Der hier beschriebene Flotationsvorgang nutzt die Unterschiede zwischen Papierfaserstoff und unerwünschten Störstoffteilchen in der Art, daß der Faserstoff aufgrund seines eher hydrophilen Charakters in der Fasersuspension verbleibt, während die angesprochenen Störstoffteilchen hydrophob sind und deshalb zusammen mit den Luftblasen in den Schaum gelangen. Weil dabei nicht alle Feststoffe ausflotiert, sondern Fasern von Verunreinigungen getrennt werden, spricht man von selektiver Flotation. Der ebenfalls benutzte Begriff "Flotationsdeinking" wird in der Regel nicht nur für die Entfernung von Druckfarbenpartikeln (ink = Druckfarbe), sondern auch allgemeiner für die selektive Flotation von Verunreinigungen aus Faserstoffsuspensionen verwendet. Solche Stoffe sind insbesondere Kleber, feine Kunststoffpartikel und eventuell auch Harze.

Da der Flotationsschaum, der bei einer einzigen Flotationsstufe gebildet wird, in den meisten Fällen noch einen beträchtlichen Anteil von Papierfasern enthält, wird das hier beschriebene Verfahren mit mindestens zwei Flotationsstufen durchgeführt, wobei der Überlauf, also der Flotationsschaum, der ersten Stufe als Einlauf in die zweite Stufe geführt wird. Üblicherweise spricht man dann von einer ersten und zweiten Flotationsstufe oder auch von Primär- und Sekundärflotation. Der Durchlauf der zweiten Flotationsstufe kann dem Zulauf der ersten Flotationsstufe wieder zugegeben werden. Anlagen, die nach einem solchen Verfahren arbeiten, haben sich an sich bewährt, da sie bei geringen Stoffverlusten zu einer guten Qualität des so gebildeten Gutstoffes führen. Da sich jedoch die Rohstoffe, insbesondere wenn sie aus Altpapier bestehen, in ihrer Zusammensetzung und Qualität ständig ändern, ist es nicht immer einfach, solche Anlagen optimal zu fahren.

Es gibt auch Fälle, bei denen der Durchlauf der zweiten Stufe dem Durchlauf der ersten Stufe zugemischt wird.

Der Erfindung liegt die Aufgabe zu Grunde, das Verfahren so zu gestalten, dass der Flotationseffekt verbessert und/oder die Verluste an verwertbaren Stoffen reduziert werden.

Diese Aufgabe wird durch die im Kennzeichen des Anspruchs 1 genannten Merkmale bereits vollständig gelöst.

Dadurch, dass der Überlauf, also der Flotationsschaum, einer späteren Flotationsstufe teilweise in dieselbe Stufe zurückgeführt wird, wird der Störstoffanteil in den zu dieser Stufe gehörenden Flotationszellen angehoben. Höherer Störstoffanteil verbessert im Allgemeinen den Flotationseffekt, und der gebildete Schaum erhält durch diese Maßnahme einen ebenfalls höheren Störstoffanteil. Diese Wirkung ist gerade bei der letzten Flotationsstufe, d.h. der Stufe, deren Überlauf nicht weiter flotiert wird, besonders wichtig. Da der andere Teil dieses Schaumes dann aus dem System herausgeführt wird, z.B. als Rejekt eingedickt und verworfen wird, kann ein hochkonzentrierter Abfallstoff entsorgt werden.

Die Erfindung und ihre Vorteile werden erläutert an Hand einer Zeichnung, die ein entsprechendes Verfahrensschema zeigt.

Danach wird die Papierfaserstoffsuspension S zunächst einer früheren Flotationsstufe 1 zugeführt, die z.B. die erste Stufe sein kann. Der apparative Aufbau einer solchen Flotationsstufe ist an sich bekannt. Sie kann eine oder mehrere Flotationszellen enthalten, welche von der Suspension nacheinander durchströmt werden. Aus der letzten Flotationszelle dieser früheren Flotationsstufe 1 tritt der Durchlauf 7 aus. Der gebildete Flotationsschaum 3 wird gesammelt und der späteren Flotationsstufe 2 zugeführt. Auch aus dieser wird ein Flotationsschaum 8 abgezogen, wobei es typisch für solche Kaskadenschaltungen ist, dass der Flotationsschaum der späteren Stufe mehr Störstoffe enthält als der Flotationsschaum der früheren Stufe. Ein Teil 8' dieses Flotationsschaums 8 wird erfindungsgemäß in den Zulauf zu derselben - also der späteren - Flotationsstufe 2 zurückgeführt. Der andere Teil 8" wird als Rejekt behandelt, wenn die spätere Flotationsstufe 2 gleichzeitig die letzte Stufe dieser Anlage ist. Die Aufteilung dieser Ströme kann über einen Regler 11 zur Qualitätsregelung des Gutstoffes 9 geändert werden.

Mit Vorteil wird mittels Niveautransmitter 10 bzw. 10' und Stellventil 12 bzw. 12' in der jeweiligen Durchlaufleitung die Höhe des Suspensionsniveaus in den Flotationszellen einer Stufe auf einem vorgegebenen Wert gehalten. Das regelt die Schaummenge am Überlaufwehr, die vom Niveau in der Flotationszelle abhängt. Auf die letzte Flotationsstufe 2 angewandt, lässt sich durch Änderung des Niveaus auch die Qualität des Gutstoffes 9 der Flotationsanlage beeinflussen. Bezogen auf den Durchsatz dieser Stufe wird nämlich mit einer größeren oder kleineren Schaummenge auch entsprechend mehr Störstoff aus dem System entfernt.

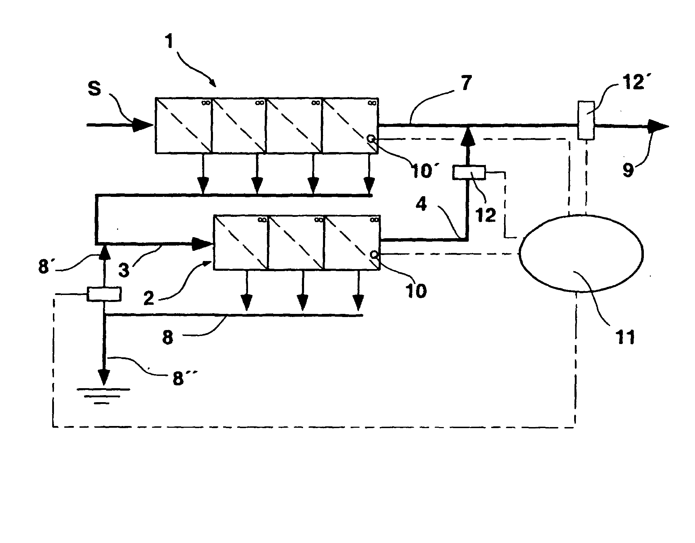

## Patentansprüche

1. Verfahren zur Entfernung von Störstoffen aus einer wässrigen Papierfaserstoffsuspension (S) mit Hilfe mindestens zweier Flotationsstufen (1, 2), welche so geschaltet sind, dass der Flotationsschaum (3) der früheren Flotationsstufe (1) in den Zulauf zur späteren Flotationsstufe (2) geführt wird,
**dadurch gekennzeichnet,**
**dass** ein Teil (8') der Menge des aus der späteren Flotationsstufe (2) abgezogenen Flotatonsschaumes (8) wieder in den Zulauf dieser Flotationsstufe (2) zurückgeführt wird.

2. Verfahren nach Anspruch 1,
**dadurch gekennzeichnet,**
**dass** der andere Teil (8") des Flotationsschaumes (8) nicht weiter flotiert wird,
so dass die spätere Flotationsstufe (2) gleichzeitig die letzte Flotationsstufe dieser Anlage ist.

3. Verfahren nach Anspruch 1 oder 2,
**dadurch gekennzeichnet,**
**dass** die Aufteilung des aus der späteren Flotationsstufe (2) abgezogenen Flotationsschaumes (8) über einen Regler (11) vorgenommen wird.

## Claims

1. A method for removing anionic trash from an aqueous paper stock suspension (S) using at least two flotation stages (1, 2) which are connected such that the flotation froth (3) of the earlier flotation stage (1) is guided into the inlet to the later flotation stage (2),
**characterised in that**
a portion (8') of the amount of flotation froth (8) withdrawn from the later flotation stage (2) is returned into the inlet to this flotation stage (2).

2. A method according to Claim 1,
**characterised in that**
the other portion (8") of the flotation froth (8) is not subjected to further flotation, so that the later flotation stage (2) is at the same time the last flotation stage of this installation.

3. A method according to Claim 1 or 2,
**characterised in that**
the flotation froth (8) withdrawn from the later flotation stage (2) is divided up by a regulator (11).

## Revendications

1. Procédé destiné à l'élimination d'impuretés d'une suspension aqueuse de fibres de papier (S) à l'aide d'au moins deux étages de flottation (1, 2), qui sont disposés de telle sorte que la mousse de flottation (3) de l'étage de flottation antérieur (1) est amenée à l'entrée de l'étage de flottation ultérieur (2),
**caractérisé en ce que**
une partie (8') de la quantité de mousse de flottation (8) soutirée de l'étage de flottation ultérieur (2) est à nouveau recyclée vers l'entrée de cet étage de flottation (2).

2. Procédé selon la revendication 1,
**caractérisé en ce que**
l'autre partie (8'') de la mousse de flottation (8) n'est pas flottée davantage, de sorte que l'étage de flottation ultérieur (2) est également le dernier étage de flottation de cette installation.

3. Procédé selon la revendication 1 ou 2,
**caractérisé en ce que**
la répartition de la mousse de flottation (8) soutirée de l'étage de flottation ultérieur (2) est effectuée par l'intermédiaire d'un régulateur (11).
